# EUROPEAN PATENT APPLICATION

(11) **EP 4 246 706 A1**
(43) Date of publication of application: **20.09.2023**
(21) Application number: 23154790.2
(22) Date of filing: 02.02.2023
(51) Int. Cl.: H01M 50/586, H01M 50/474, H01M 50/477, H01M 50/483, H01M 50/486, H01M 50/491, H01M 10/0585, H01M 10/0525, H01M 50/411, H01M 50/431, H01M 50/46

(54) **ELECTRODE, ELECTRODE ELEMENT, ELECTROCHEMICAL ELEMENT, AND POWER STORAGE DEVICE**

(30) Priority: 17.03.2022 JP 2022043143
(71) Applicant: Ricoh Company, Ltd., Tokyo 143-8555 (JP)
(72) Inventor: Nose, Daisuke, Tokyo, 143-8555 (JP); Takauji, Keigo, Tokyo, 143-8555 (JP); Kai, Sayaka, Tokyo, 143-8555 (JP); Ohkimoto, Miku, Tokyo, 143-8555 (JP); Sugihara, Naoki, Tokyo, 143-8555 (JP); Yamazaki, Takuya, Tokyo, 143-8555 (JP); Arita, Manabu, Tokyo, 143-8555 (JP); Abe, Naoto, Tokyo, 143-8555 (JP)
(74) Representative: Marks & Clerk LLP

(57) **Abstract**

The present disclosure provides an electrode (5) including an electrode substrate (8), an electrode mixture layer (9) on the electrode substrate (8), and an insulating layer (10) on one surface (91) of the electrode mixture layer (9), in which the insulating layer (10) includes a first region (R1) including a first film thickness layer (10A) having a first thickness (T11) in a direction perpendicular to the one surface (91), and a second region (R2) including the first film thickness layer (10A) and a second film thickness layer (10B) having a second thickness (T12) in a direction perpendicular to the one surface (91), and the second region (R2) is at least a part of a peripheral edge (91A) of the one surface (91).

## Description

### BACKGROUND

### Technical Field

The present disclosure relates to an electrode, an electrode element, an electrochemical element, and a power storage device.

### Related Art

In recent years, a smartphone, a notebook computer, and the like are widely used in everyday life, and an electric vehicles without an internal combustion engine begins to attract attention worldwide with the aim of creating a decarbonized society. Such electronic devices are equipped with a lithium ion secondary battery (hereinafter may be referred to as "lithium ion battery") characterized by having high output and high energy density.

The lithium ion battery generally has a self-supporting separator made of polyolefin or the like provided between a positive electrode and a negative electrode to ensure insulation between the positive and negative electrodes. However, it is known that the self-supporting separator is subject to lamination misalignment due to vibration or impact, or to short-circuiting due to contraction during abnormal heat generation. To address such a problem, a separator-integrated electrode is proposed in which an insulating layer is formed on a surface of the negative electrode or positive electrode (see, for example, Japanese Unexamined Patent Application Publication No. 2000-277386).

However, when the separator-integrated electrode is cut out with a slitter or a die, an insulating layer is not formed at an edge, and an active material is partly exposed, and thus, when operated as an electrochemical element, there is a concern that a short circuit may occur due to contact between electrodes facing each other. It is possible to reduce a probability of the short circuit by increasing a thickness of the insulating layer formed on the electrodes, but an increase in a distance between the electrodes causes an increase in internal resistance and a decrease in volumetric energy density, which is a problem.

### SUMMARY

An object of the present disclosure is to provide a separator-integrated electrode by which it is possible to prevent a short circuit between electrodes facing each other at an end of the electrode without a decrease in battery performance.

One aspect of the present disclosure is an electrode including an electrode substrate, an electrode mixture layer on the electrode substrate, and an insulating layer on one surface of the electrode mixture layer, in which the insulating layer includes a first region including a first film thickness layer having a first thickness in a direction perpendicular to the one surface, and a second region including the first film thickness layer and a second film thickness layer having a second thickness in a direction perpendicular to the one surface, and the second region is at least a part of a peripheral edge of the one surface.

According to one aspect of the present disclosure, a separator-integrated electrode by which it is possible to prevent a short circuit between electrodes facing each other at an end of the electrode without a decrease in battery performance, is provided.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram (Part 1) illustrating a plan view and cross-sectional views of an example of a first electrode formed with a porous insulating layer having a first film thickness layer and a second film thickness layer according to the present embodiment;
FIG. 2 is a schematic diagram (Part 2) illustrating a plan view and cross-sectional views of an example of a first electrode formed with a porous insulating layer having a first film thickness layer and a second film thickness layer according to the present embodiment;
FIG. 3 is a schematic diagram (Part 3) illustrating a plan view and cross-sectional views of an example of a first electrode formed with a porous insulating layer having a first film thickness layer and a second film thickness layer according to the present embodiment;
FIG. 4 is a schematic diagram (Part 4) illustrating a plan view and cross-sectional views of an example of a first electrode formed with a porous insulating layer having a first film thickness layer and a second film thickness layer according to the present embodiment;
FIG. 5 is a cross-sectional view of a second electrode of the present embodiment;
FIG. 6 is a cross-sectional view (Part 1) of an electrode laminate for a power storage element according to the present embodiment;
FIG. 7 is a cross-sectional view (Part 2) of an electrode laminate for a power storage element according to the present embodiment;
FIG. 8 is a cross-sectional view (Part 3) of an electrode laminate for a power storage element according to the present embodiment;
FIG. 9 is a schematic diagram (Part 1) illustrating an example of an apparatus for manufacturing an electrode for a power storage element; and
FIG. 10 is a schematic diagram (Part 2) illustrating an example of an apparatus for manufacturing an electrode for a power storage element.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

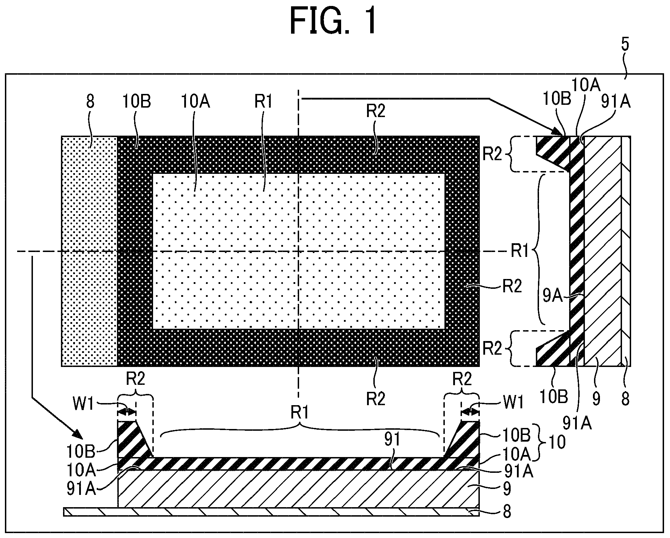

Embodiments of the present disclosure will be described below. FIG. 1 is a schematic diagram (Part 1) illustrating a plan view and cross-sectional views of an example of a first electrode formed with a porous insulating layer having a first film thickness layer and a second film thickness layer.

### Electrode

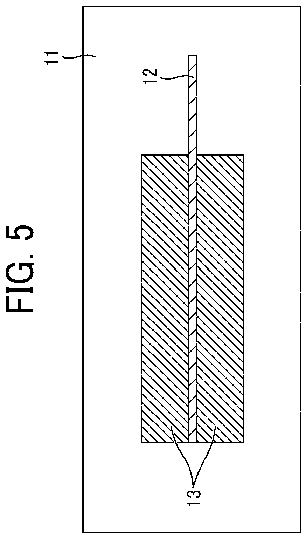

An electrode according to the present embodiment includes an electrode substrate, an electrode mixture layer, and an insulating layer. As used herein, the electrode is a general term for a negative electrode and a positive electrode. In the present embodiment, of a first electrode 5 forming a positive electrode and a second electrode 11 forming a negative electrode, described later, the first electrode 5 is an example of the electrode of the present disclosure (FIGS. 1 and 5). The first electrode 5 may be either the positive electrode or the negative electrode. If the first electrode 5 is the negative electrode, the second electrode 11 is the positive electrode.

### Electrode Substrate

The electrode substrate is also called a current collector. The electrode substrate is a general term for an electrode substrate for a negative electrode and an electrode substrate for a positive electrode. In the present embodiment, of a current collector (electrode substrate for a positive electrode) 8 of the first electrode 5 and a current collector (electrode substrate for a negative electrode) 12 of the second electrode 11, described later, the current collector (electrode substrate for a positive electrode) of the first electrode 5 is an example of the electrode substrate in the electrode of the present disclosure (FIGS. 1 and 5).

Any conductive substrate may be used for the electrode substrate, and examples of the electrode substrate may include, but not limited to, an aluminum foil, a copper foil, a stainless foil, a titanium foil, an etched foil with fine holes by etching such foils, and a perforated electrode substrate used in a lithium-ion capacitor. Such an electrode substrate may be suitably used for a secondary battery and a capacitor which are typical power storage elements, and particularly suitably used for a lithium ion secondary battery.

### Electrode Mixture Layer

The electrode mixture layer is provided on the electrode substrate. The electrode mixture layer is a general term for a positive electrode mixture layer and a negative electrode mixture layer. In the present embodiment, in the first electrode 5, an electrode mixture layer (positive electrode mixture layer) 9 is formed on the electrode substrate (positive electrode current collector) 8 (FIG. 1). The electrode mixture layer (positive electrode mixture layer) 9 is an example of an electrode mixture layer forming the electrode of the present embodiment (FIGS. 1 and 5).

The electrode mixture layer may be designed without any particular limitation depending on a purpose. The electrode mixture layer includes, for example, at least an active material (a negative electrode active material or a positive electrode active material), and may optionally include a binder (binding agent), a thickening agent, a conducting agent, and the like.

The electrode mixture layer is formed by dispersing a powdery active material, a binding agent, a conductive material, and the like in a liquid, and applying the resultant dispersion liquid on the electrode substrate, followed by fixing and drying. An applying method is not particularly limited, and examples of the applying method may include spray, dispenser, die coater, and pull-up coating.

### Active Material

The active material is a general term for a positive electrode active material and a negative electrode active material. The active material is not particularly limited as long as a material that may reversibly occlude and release an alkali metal ion is provided.

Typically, an alkali-metal-containing transition metal compound may be used as the active material for a positive electrode. Examples of a lithium-containing transition metal compound include, but are not limited to, a composite oxide including lithium and at least one element selected from the group consisting of cobalt, manganese, nickel, chromium, iron, and vanadium.

Examples of the composite oxide include, but are not limited to, a lithium-containing transition metal oxide such as lithium cobalt oxide, lithium nickel oxide, and lithium manganese oxide; an olivine-type lithium salt such as LiFePO₄; a chalcogen compound such as titanium disulfide and molybdenum disulfide; and manganese dioxide. The lithium-containing transition metal oxide refers to a metal oxide containing lithium and a transition metal or a metal oxide in which a part of the transition metal in the metal oxide is substituted with a hetero element.

Examples of the hetero element include, but are not limited to, Na, Mg, Sc, Y, Mn, Fe, Co, Ni, Cu, Zn, Al, Cr, Pb, Sb, and B, and in particular, Mn, Al, Co, Ni, and Mg are preferable. One type of hetero element or two or more types of hetero elements may be used. Such active materials for a positive electrode may be used singly or in combination. If the electrode is used for a nickel-hydrogen battery, nickel hydroxide and the like may be used as the active material.

Typically, a carbon material including graphite having a graphite-type crystal structure may be used as the active material for a negative electrode. Examples of such a carbon material include, but are not limited to, natural graphite, spherical or fibrous synthetic graphite, hardly-graphitizable carbon (hard carbon), and easily-graphitizable carbon (soft carbon).

As a material other than the carbon material, lithium titanate may also be used. For improving energy density of the lithium ion battery, a high capacity material such as silicon, tin, silicon alloy, tin alloy, silicon oxide, silicon nitride, and tin oxide may also be suitably used as the active material for a negative electrode.

### Binding Agent

Examples of the binding agent include, but are not limited to, polyvinylidene fluoride (PVDF), polytetrafluoroethylene (PTFE), polyethylene, polypropylene, aramid resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyether sulfone, hexafluoropolypropylene, styrene-butadiene rubber, and carboxymethylcellulose.

In addition, examples of the binding agent include, but are not limited to, a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene.

These binding agents may be used singly or in combination with others.

### Conducting Agent

Examples of the conducting agent in the present embodiment include, but are not limited to, graphites such as natural graphite and synthetic graphite, carbon blacks such as acetylene black, ketjen black, channel black, furnace black, lamp black, thermal black, conductive fibers such as carbon fibers and metal fibers, metal powders such as fluorocarbon and aluminum, conductive whiskers such as zinc oxide and potassium titanate, a conductive metal oxide such as a titanium oxide, and an organic conductive material such as a phenylene derivative and a graphene derivative.

### Insulating Layer

The insulating layer is provided on one surface of the electrode mixture layer. In the present embodiment, in the first electrode 5 (positive electrode), the insulating layer 10 is formed on one surface 91 of the electrode mixture layer (positive electrode mixture layer) 9 (FIG. 1). In the second electrode 11 (negative electrode), the current collector (negative electrode substrate) 12 and the electrode mixture layers (negative electrode mixture layers) 13 on both sides of the current collector (negative electrode substrate) 12 are formed, but no insulating layer is formed (FIG. 5).

The insulating layer, which is not particularly limited, preferably is a porous structure body (hereinafter referred to as "porous insulating layer") having a volume resistivity of 1 × 10¹² (Ω·cm) or more. If the insulating layer having the volume resistivity of 1 × 10¹² (Ω·cm) or more is provided, an electrical short circuit between the positive and negative electrodes is less likely to occur.

From the viewpoint of ensuring good permeability of liquids and gases, the porous insulating layer preferably has a structure in shape in which a plurality of pores of the porous insulating layers are continuously connected with a three-dimensional branched network structure as a skeleton. That is, it is preferable that the porous insulating layer has many pores and each one of the pores is communicated with surrounding pores and spread three-dimensionally. When the pores communicate with each other, it is easier for liquids and gases to permeate.

As a method for confirming that the pores are communicating, for example, there is a method in which image observation of a cross section of the porous structure body is performed with a scanning electron microscope (SEM) or the like to confirm that the connections between the pores are continuous. One of physical properties obtained when the pores communicate with each other is air permeability.

The air permeability of the porous structure body may be measured according to Japanese Industrial Standards (JIS) P8117, and the air permeability is preferably 1,000 seconds/100 mL or less, more preferably 500 seconds/100 mL or less, and particularly preferably 300 seconds/100 mL or less.

In this case, the air permeability may be measured by using a Gurley densometer (manufactured by Toyo Seiki Seisaku-sho, Ltd.). Therefore, as an example, it may be possible to determine that the pores communicate with each other when the air permeability is 1,000 seconds/100 mL or less.

A cross-sectional shape of the pores are not particularly limited and may include various shapes such as a substantially circular shape, a substantially elliptical shape, and a substantially polygonal shape. The size of the pores is not particularly limited, either. Here, the size of the pores refers to a length of the longest straight line that may be drawn on the cross-sectional shape of the pore. The size of the pores may be evaluated from a cross-sectional image acquired using a scanning electron microscope (SEM).

The size of the pores provided in the porous structure body is preferably 0.1 µm or more and 10 µm or less, and more preferably 0.1 µm or more and 1 µm or less. When the size of the pores is 0.1 µm or more and 10 µm or less, sufficient permeation of liquid and gas occurs in the porous structure body, and as a result, it is possible to efficiently express a function such as a material separation and a reaction field.

As will be described later, if the porous structure body is used as the insulating layer of the power storage element, when the size of the pores is 10 µm or less, it is possible to prevent a short circuit between the positive electrode and the negative electrode due to a lithium dendrite generated inside the power storage element, and thus it is possible to improve safety.

A porosity of the porous structure body is preferably 30% or more, and more preferably 50% or more. The porosity of the porous structure body is preferably 90% or less, and more preferably 85% or less.

When the porosity is 30% or more, sufficient permeation of liquid and gas occurs in the porous structure body, and as a result, it is possible to efficiently express a function such as a material separation and a reaction field. If the porous structure body is used as the insulating layer in the power storage element, the permeability of an electrolyte solution and the permeability of ions are improved, and reaction inside the electric power storage element progresses efficiently. When the porosity is 90% or less, the strength of the porous structure body is improved.

A method for measuring the porosity of the porous structure body is not particularly limited, but it is possible to use a method in which the porous structure body is filled with unsaturated fatty acid (commercially available butter), after applying osmium staining, an internal cross-sectional structure is cut out with FIB (Focused Ion Beam), and the porosity is measured by using SEM (Scanning Electron Microscope).

The porous structure body, which is not particularly limited, may preferably include an inorganic solid containing an inorganic oxide bound by a binder, or a resin structure body having a resin skeleton.

Examples of the inorganic oxides included in the inorganic solid include, but are not limited to, a substance derived from a mineral resource such as aluminum oxide, titanium dioxide, barium titanate, zirconium dioxide, nickel oxide, manganese oxide, vanadium dioxide, silicon dioxide, zeolite, or an artificially constructed item including such a substance. In particular, from the viewpoint of electrical resistance and stability, aluminum oxide and titanium dioxide are preferable, aluminum oxide is more preferable, and α-alumina is further preferable.

As the binder that binds the inorganic oxide, for example, the binding agent described above is used.

In the present embodiment, when the porous structure body includes the inorganic oxide bound by the binder, it is possible to impart high insulation property to the insulating layer including the porous structure body and it is also possible to obtain excellent adhesion to a member different from the porous structure body. Therefore, it is possible to improve the insulation between the first electrode 5 and the second electrode 11 facing the first electrode 5, while maintaining reliability.

Further, the resin structure body is a porous cured resin product including a skeleton formed from a resin and pores formed by portions where the skeleton is not formed. The resin structure body preferably has a co-continuous structure or a monolithic structure formed by connecting the resin portions and the pores.

In the present embodiment, when the porous structure body is a resin structure body having a resin skeleton, it is possible to easily form the porous insulating layer and also possible to impart various functions depending on the resin material and composition of the porous structure body, resulting in improvement in degree of freedom in design.

In the present embodiment, if the resin structure body having a co-continuous structure is used for the porous insulating layer, in the power storage element having such a porous insulating layer, the permeability of the electrolyte solution and the permeability of ions are improved, and reaction inside the electric power storage element progresses efficiently.

The continuous resin portions refers to a configuration in which no interface exists in the resin portion. That is, such a configuration is distinguished from a configuration in which a plurality of resin particles or the like are bound and connected by the binder or the like that is a resin different from the resin particles. It is possible to form such a structure, for example, by a polymerization-induced phase separation method described below.

### First Region, Second Region

The porous insulating layer (insulating layer) 10 provided in the electrode of the present embodiment includes a first region R1 and a second region R2.

The first region R1 does not include a second film thickness layer 10B but includes a first film thickness layer 10A. The first region R1 is a region having the first film thickness layer 10A as a surface layer, in plan view of the first electrode 5.

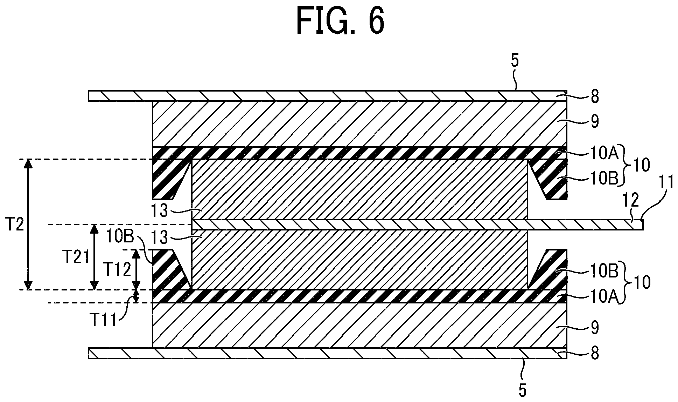

The first region R1 is a region mainly facing the electrode mixture layer 13 of the second electrode 11, out of the porous insulating layer 10 formed in the first electrode 5. That is, the first region R1 is a region included in an ion reaction field in a secondary battery, and a thinner film thickness of the porous insulating layer 10 in the first region R1 provides a better battery characteristic (FIG. 6).

The second region R2 includes the first film thickness layer 10A and the second film thickness layer 10B (FIG. 1). The second region R2 is a region having the second film thickness layer 10B as a surface layer, in plan view of the first electrode 5. The second region R2 is a region obtained by eliminating the region facing the electrode mixture layer 13 of the second electrode 11, out of the porous insulating layer 10 formed on the first electrode 5.

### First Film Thickness Layer

The first film thickness layer 10A is a part of the porous insulating layer 10 and is formed of the porous structure body described above. When the first film thickness layer 10A is formed of the porous structure body, the permeability of the electrolyte solution and an ion permeability of the first film thickness layer 10A including the region R1 facing the second electrode 11 are improved.

The first film thickness layer 10A has a first thickness T11 in a direction perpendicular to the one surface 91 of the electrode mixture layer (positive electrode mixture layer) 9 (FIG. 6).

The thickness T11 of the first film thickness layer 10A, which is not particularly limited, is preferably 1.0 µm or more and 50.0 µm or less, and particularly preferably 5.0 µm or more and 20.0 µm or less.

When the thickness T11 of the first film thickness layer 10A is 1.0 µm or more, it is possible to secure a film thickness which suppresses a short circuit due to unevenness of an active material (electrode mixture layer), and when the thickness T11 of the first film thickness layer 10A is 50.0 µm or less, it is possible to obtain a good battery characteristic. When the thickness T11 of the first film thickness layer 10A is 5.0 µm or more, it is possible to secure a film thickness which more effectively suppresses a short circuit due to unevenness of an active material (electrode mixture layer), and when the thickness T11 of the first film thickness layer 10A is 20.0 µm or less, it is possible to obtain a better battery characteristic.

### Second Film Thickness Layer

The second film thickness layer 10B is a portion obtained by eliminating the first film thickness layer 10A of the porous insulating layer 10, may be formed of a non-porous structure body, but is preferably formed of the porous structure body described above. When the second film thickness layer 10B is formed of the porous structure body, it is possible to continuously integrate the porous structure body of the first film thickness layer 10A and the porous structure body of the second film thickness layer 10B. As a result, it is possible to simultaneously form the second film thickness layer 10B and the first film thickness layer 10A.

The porous structure body of the second film thickness layer 10B may be formed of a porous structure body different from the porous structure body of the first film thickness layer 10A. Here, the different porous structure body refers to a porous structure body relatively different in material of the porous structure body, composition, permeability of the porous structure body, size of the pores, cross-sectional shape of the pores, and the like.

When the porous structure body of the second film thickness layer 10B is different from the porous structure body of the first film thickness layer 10A, it is possible to impart a different function such as ion permeability and adhesiveness, to each of the first film thickness layer 10A and the second film thickness layer 10B of the porous insulating layer 10.

The porous structure body of the first film thickness layer 10A may include a porous structure body in the first region R1, which is different from a porous structure body in the second region R2. In this case, the porous structure bodies of the first film thickness layer 10A and the second film thickness layer 10B in the second region R2 may be the same porous structure body, and different porous structure bodies.

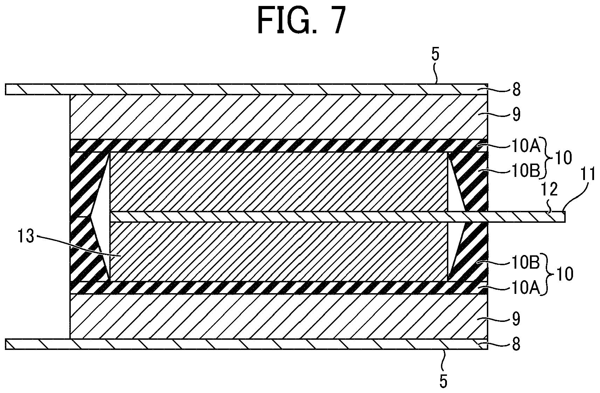

The second film thickness layer 10B includes a second thickness T12 in a direction perpendicular to the one surface 91 of the electrode mixture layer (positive electrode mixture layer) 9 (FIG. 6). The insulating layer in the second region R2 is thicker than the insulating layer in the first region R1. The thickness T12 of the second film thickness layer 10B is preferably equal to or less than a half T21 of the thickness (total film thickness) T2 of the second electrode 11 due to structural limitations during lamination (FIGS. 6 and 7).

It is preferable that a thickness of the insulating layer of the second region R2 (total of the thickness T11 of first film thickness layer 10A and the thickness T12 of the second film thickness layer 10B), which is not particularly limited, is sufficiently provided (26 µm or more) not allowing for a short circuit when the second electrode 11 is held down from above with a palm of a hand, in a state where the second electrode 11 is placed on the first electrode 5.

If the thickness of the second region R2 (sum of the thickness T11 of the first film thickness layer 10A and the thickness T12 of the second film thickness layer 10B) exceeds the half T21 of the total film thickness T2 of the second electrode 11, a distance between the first electrode and the second electrode is widened, there may be a risk of deterioration in battery characteristics.

The second film thickness layer 10B may face the second electrode 11, but from the viewpoint of suppressing deterioration of battery characteristics, the second film thickness layer 10B may desirably not face the second electrode 11 as much as possible. When an area facing the second electrode 11 is 20% or less as compared to the case where the second film thickness layer 10B is not provided, the battery characteristics are less likely to deteriorate.

A material used for the second film thickness layer 10B is preferably an adhesive material.

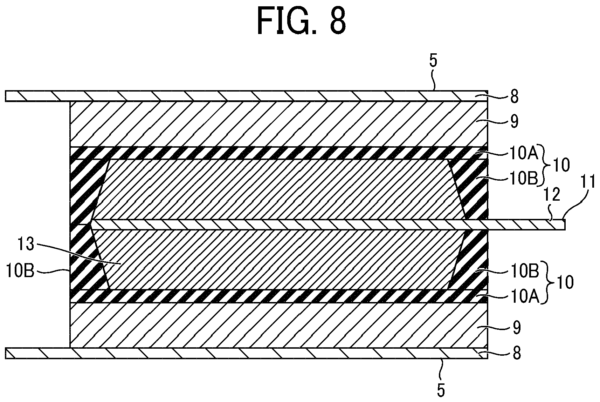

As a result, a laminate is integrated as illustrated in FIGS. 7 and 8, and a battery with higher safety may be produced. Another result is that the laminate is integrated to enhance the ability to retain the electrolyte solution (electrolyte solution discharge suppression effect), and an improvement in battery life can be expected. The adhesive material includes a resin having a glass transition temperature or the like.

Although, in the present embodiment, the porous insulating layer 10 has a two-layer structure including the first film thickness layer 10A and the second film thickness layer 10B, the porous insulating layer 10 may further include a third film thickness layer (three-layer structure) or a multi-layered structure having four or more layers.

In the electrode according to the present embodiment, the second region R2 is at least a part of a peripheral edge 91A of the one surface 91 of the electrode mixture layer (positive electrode mixture layer) 9. The peripheral edge 91A of the one surface 91 of the electrode mixture layer (positive electrode mixture layer) 9 is a part of the electrode mixture layer (positive electrode mixture layer) 9 formed at an end of the first electrode 5.

In a longitudinal direction or a lateral direction of the electrode mixture layer, the peripheral edge 91Ais preferably a portion of 15% or less and 1% or more from an edge side of the electrode mixture layer (positive electrode mixture layer), relative to the full longitudinal length or the full lateral length.

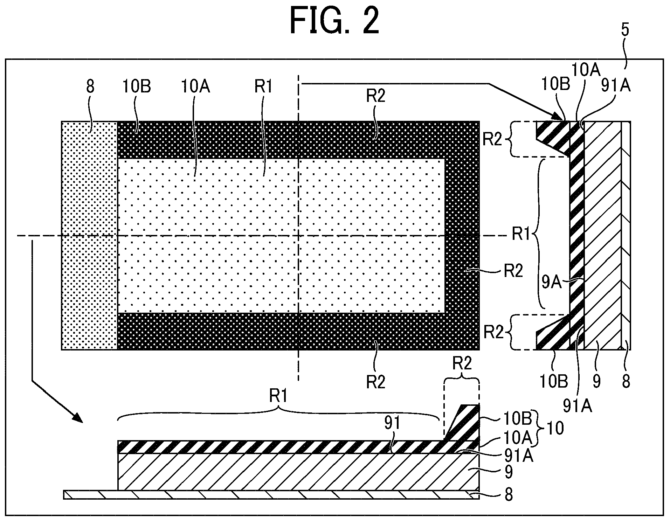

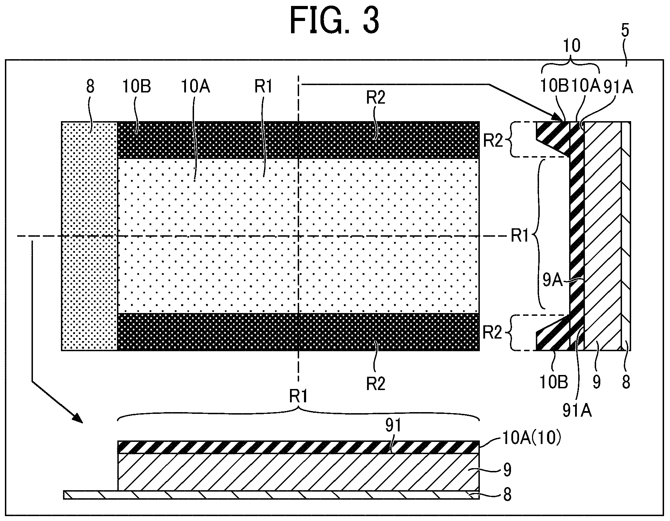

Modes where the second region R2 is at least a part of the peripheral edge 91A of the one surface 91 of the electrode mixture layer (positive electrode mixture layer) 9 are illustrated below in FIGS. 1 to 4. In each of FIGS. 1 to 4, the one surface 91 of the electrode mixture layer (positive electrode mixture layer) 9 is rectangular. In FIGS. 2 and 3, components common to those in FIG. 1 are denoted by the same or corresponding reference numerals, and description thereof is omitted.

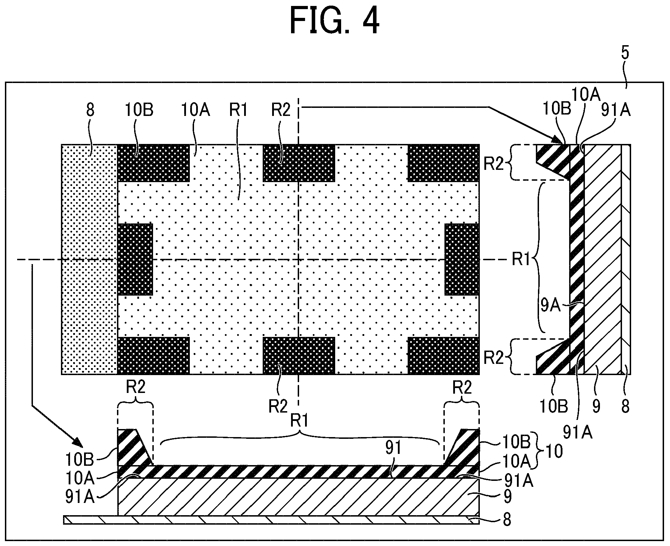

In an example of FIG. 1, the second region R2 is formed continuously along the entire circumference of the peripheral edge 91A. In an example of FIG. 2, the second region R2 is formed on each of three sides of the one surface 91. In an example of FIG. 3, the second region R2 is formed on each of two sides of the one surface 91. In the example of FIG. 3, the two sides face each other on the one surface 91. In an example of FIG. 4, the second region R2 is discontinuously formed along the entire circumference of the peripheral edge 91A.

With such a configuration, as illustrated in FIGS. 1 to 6, when a plurality of electrodes are layered, the second electrode 11 is sandwiched between the first electrodes 5, and thus, lamination misalignment due to vibration or impact is less likely to occur. Even if such lamination misalignment occurs, the film thickness of the porous insulating layer is thick and the distance between the electrodes is long, and thus, the risk of short circuit is reduced, and the effect of improving safety may be expected.

In the example illustrated in FIG. 1, the second region R2 formed continuously along the entire circumference of the peripheral edge 91A enables the insulating layer 10 (second film thickness layer 10B) of the first electrode 5 to face the entire circumference of the second electrode 11. Therefore, it is possible to improve the insulation while more stably arranging the second electrode 11 facing the first electrode 5.

In the examples of FIGS. 2 to 4, the second region R2 is partially formed along the peripheral edge 91A, and thus, it is possible to reduce an amount of material used for the insulating layer 10 without reducing the stability and the insulation of the arrangement of the second electrode 11 facing the first electrode 5.

In the present embodiment, as illustrated in FIG. 6, the second electrode 11, which is the facing electrode, is sandwiched and laminated between the two first electrodes 5. With such a configuration, the presence of the insulating layer 10 (second film thickness layer 10B) of the first electrode 5 provides reliable insulation between a side end of the electrode mixture layer 9 of the first electrode 5 and a side end of the electrode mixture layer 13 of the second electrode 11, and thus, it is possible to prevent short circuit between the first electrode 5 and the second electrode 11 (FIG. 6).

In the present embodiment, as illustrated in FIG. 7, the second electrode 11, which is the facing electrode, is sandwiched and laminated between the two first electrodes 5, and with this state, a space between the two first electrodes 5 is closed. Such a configuration provides a stable presence of the second electrode 11 between the two first electrodes 5. As a result, lamination misalignment due to vibration or impact is even less likely to occur (FIG. 7).

In the present embodiment, as illustrated in FIG. 8, the second electrode 11, which is the facing electrode, is sandwiched and laminated between the two first electrodes 5, and no gap is formed between the first electrode 5 and the second electrode 11. That is, in the example illustrated in FIG. 8, the insulating layer 10 (second film thickness layer 10B) of the first electrode 5 and the side end of the electrode mixture layer 13 of the second electrode 11 are connected.

Thus, the example illustrated in FIG. 8 has a configuration allowing for formation of an electrochemical element containing more electrode mixture layers, and therefore, it is possible to improve an energy density.

In the electrode of the present embodiment, it is preferable that the second film thickness layer 10B has an inclined shape reducing in width W1 with distance from the first region R1 in a direction perpendicular to the one surface 91. Specifically, in the porous structure body in the second film thickness layer 10B, the half T21 of the total film thickness continuously changes toward the first film thickness layer 10A. In other words, the second film thickness layer 10B has an inclined shape in which the width W1 widens from an upper side of the first region R1 toward the first region R1 (FIGS. 1 to 4).

When the second film thickness layer 10B has such an inclined shape, the second electrode 11, which is the electrode facing the first electrode 5 formed with the insulating film, is easily laminated, and thus, a stable presence of the second electrode 11 can be provided. This makes it easier to maintain a constant distance between the first electrode 5 and the second electrode 11, and thus, it is possible to expect improvement of the reliability of the battery (FIG. 6).

A material of the porous insulating layer in the present embodiment is not particularly limited, as long as volume resistivity of 1 × 10¹² (Ω·cm) or more is provided, and a resin, an inorganic solid, and the like may be used. In the first film thickness layer 10A and the second film thickness layer 10B of the insulating layer in the first region R1 and the second region R2, a combination of respectively different materials may be used, and in the insulating layer of the first region and the insulating layer of the second region, respectively different materials may be used in combination.

The resin that may be used for the porous insulating layer is not particularly limited, but examples thereof may include, but are not limited to, an acrylate resin, a methacrylate resin, a urethane acrylate resin, a vinyl ester resin, an unsaturated polyester resin, an epoxy resin, an oxetane resin, and a vinyl ether resin, that is, a resin that may be formed by irradiation with active energy rays such as ionizing radiation, ultraviolet rays, and infrared rays (heat); and a resin utilizing ene-thiol reaction.

In particular, acrylate resin, a methacrylate resin, a urethane acrylate resin, and a vinyl ester resins are preferred, that is, a resin that may be formed using highly reactive radical polymerization are preferable, and (meth)acrylic resins such as an acrylate resin and a methacrylate resin are more preferable.

A resin which may be formed by irradiation with ionizing radiation and ultraviolet rays is preferable. Such a resin may be instantly formed by irradiation with ionizing radiation and ultraviolet rays, and thus, it is possible to expect productivity improvement.

A liquid composition that forms a resin by polymerization preferably contains a polymerizable compound, a solvent, a polymerization initiator, and the like.

The liquid composition forms a porous structure portion by curing. In the present embodiment, the formation of the porous structure portion by curing includes a case where the porous structure portion is formed in the liquid composition, and also a case where a porous structure body precursor is formed in the liquid composition and the porous structure body is formed in a subsequent step (for example, heating step).

Furthermore, in addition to a case where the porous structure body is formed by curing all the components of the liquid composition, a case where the porous structure body is formed by curing (polymerizing) some components (polymerizable compound and the like) in the liquid composition and other components (solvent and the like) in the liquid composition are not cured to form the porous structure body, is also included in the above meaning.

As a result of polymerization of the polymerizable compound, a resin is formed, and as a result of polymerization in the liquid composition, a porous structure is formed. It is preferable that the polymerizable compound is irradiated with active energy rays to form the resin. By using a difunctional or higher polymerizable compound, the resin formed by the polymerizable compound preferably has a crosslinked structure in the molecule. The crosslinked structure increases the glass transition temperature or the melting point of the porous structure portion, resulting in improved strength.

Any active energy ray may be used as long as such energy ray can impart sufficient energy for the polymerization reaction of the polymerizable compound in the liquid composition, there is no particular limitation, but example thereof may include, but are not limited to, ultraviolet rays, electron beams, α rays, β rays, γ rays, and X rays. In particular, the ultraviolet rays are preferable.

If a high-energy light source is particularly used, the polymerization reaction may proceed without using a polymerization initiator. The polymerizable compound preferably has at least one radical-polymerizable functional group. Examples thereof include, but are not limited to, monofunctional, difunctional, and trifunctional or higher radical-polymerizable compounds, functional monomers, and radical-polymerizable oligomers. In particular, difunctional or higher radical-polymerizable compounds are preferable.

Examples of the monofunctional radically polymerizable compounds include, but are not limited to, 2-(2-ethoxyethoxy)ethyl acrylate, methoxy polyethylene glycol monoacrylate, methoxy polyethylene glycol monomethacrylate, phenoxy polyethylene glycol acrylate, 2-acryloyloxyethyl succinate, 2-ethylhexyl acrylate, 2-hydroxyethyl acrylate, 2-hydroxypropyl acrylate, tetrahydrofurfuryl acrylate, 2-ethylhexyl carbitol acrylate, 3-methoxybutyl acrylate, benzyl acrylate, cyclohexyl acrylate, isoamyl acrylate, isobutyl acrylate, methoxytriethylene glycol acrylate, phenoxytetraethylene glycol acrylate, cetyl acrylate, isostearyl acrylate, stearyl acrylate, and styrene monomer. Each of these compounds may be used alone or in combination with others.

Examples of the difunctional radically polymerizable compounds include, but are not limited to, 1,3-butanediol diacrylate, 1,4-butanediol diacrylate, 1,4-butanediol dimethacrylate, 1,6-hexanediol diacrylate, 1,6-hexanediol dimethacrylate, diethylene glycol diacrylate, polyethylene glycol diacrylate, neopentyl glycol diacrylate, EO-modified bisphenol A diacrylate, EO-modified bisphenol F diacrylate, and tricyclodecane dimethanol diacrylate. Each of these compounds may be used alone or in combination with others.

Examples of the trifunctional or higher radically polymerizable compounds include, but are not limited to, trimethylolpropane triacrylate (TMPTA), trimethylolpropane trimethacrylate, EO-modified trimethylolpropane triacrylate, PO-modified trimethylolpropane triacrylate, caprolactone-modified trimethylolpropane triacrylate, HPA-modified trimethylolpropane trimethacrylate, pentaerythritol triacrylate, pentaerythritol tetraacrylate (PETTA), glycerol triacrylate, ECH-modified glycerol triacrylate, EO-modified glycerol triacrylate, PO-modified glycerol triacrylate, tris(acryloxyethyl) isocyanurate, dipentaerythritol hexaacrylate (DPHA), caprolactone-modified dipentaerythritol hexaacrylate, dipentaerythritol hydroxypentaacrylate, alkyl-modified dipentaerythritol pentaacrylate, alkyl-modified dipentaerythritol tetraacrylate, alkyl-modified dipentaerythritol triacrylate, dimethylolpropane tetraacrylate (DTMPTA), pentaerythritol ethoxytetraacrylate, EO-modified phosphate triacrylate, and 2,2,5,5-tetrahydroxymethylcyclopentanone tetraacrylate. Each of these compounds may be used alone or in combination with others.

The content of the polymerizable compound in the resin-forming liquid composition is preferably 5.0% by mass or more and 70.0% by mass or less, more preferably, 10.0% by mass or more and 50.0% by mass or less, and further preferably, 20.0% by mass or more and 40.0% by mass or less, relative to the total amount of the liquid composition.

If the content of the polymerizable compound is 70.0% by mass or less, the size of the pores in the resulting porous structure portion is not excessively small such as several nm or less, the porous structure portion has an appropriate porosity, and it is possible to suppress the tendency of the permeability of liquids and gases to lower, hence preferable. If the content of the polymerizable compound is 5.0% by mass or more, a three-dimensional network structure of the resin is sufficiently formed, and as a result, the porous structure is sufficiently formed, and the strength of the resulting porous structure portion also tends to improve, hence preferable.

If it is desired to obtain a resin having high hardness or scratch resistance and a porous structure portion formed from such a resin, the content of the polymerizable compound in the liquid composition is preferably 30.0% by mass or more and 70.0% by mass or less, more preferably, 40.0% by mass or more and 70.0% by mass or less, and further preferably, 50.0% by mass or more and 70.0% by mass or less, relative to the total amount of the liquid composition. This is because when the content of the polymerizable compound relative to the total amount of the liquid composition is increased, it is possible to realize a resin having high hardness or scratch resistance and a porous structure portion formed from such a resin.

A solvent (hereinafter also referred to as "porogen") is a liquid compatible with the polymerizable compound. The solvent is a liquid which becomes incompatible (causes phase separation) with the resulting polymer (resin) in the process of polymerizing the polymerizable compound in the liquid composition. When the solvent is included in the liquid composition, the polymerizable compound forms a porous structure portion after polymerized in the liquid composition.

It is also preferable that a compound that generates a radical or an acid by light or heat (polymerization initiators described later) can be dissolved in the solvent. A single type of solvent may be used alone or two or more types of solvents may be used in combination. The solvent is not polymerizable.

A boiling point when one type of porogen is used alone or a boiling point when two or more types are used in combination is preferably 50°C or more and 250°C or less, more preferably 70°C or more and 200°C or less, at normal pressure. When the boiling point is 50°C or more, evaporation of the porogen is suppressed at near room temperature, excellent handling property of the liquid composition is achieved, and thus controlling the porogen content in the liquid composition is facilitated.

When the boiling point is 250°C or less, a time for drying the porogen after polymerization is reduced, and as a result, productivity of the porous structure body is improved. In addition, it is possible to reduce the amount of porogen remaining inside the porous structure portion, and thus, when the porous structure body is used as a functional layer such as a separation layer that separates substances or a reaction layer serving as a reaction field, quality improves.

The boiling point when one type of porogen is used alone or the boiling point when two or more types are used in combination is preferably 120°C or more, at normal pressure.

Examples of the porogen include, but are not limited to, ethylene glycols such as diethylene glycol monomethyl ether, ethylene glycol monobutyl ether, ethylene glycol monoisopropyl ether, and dipropylene glycol monomethyl ether; esters such as γ-butyrolactone and propylene carbonate; and amides such as N,N-dimethylacetamide. Examples of the porogen further include liquids with relatively high molecular weights, such as methyl tetradecanoate, methyl decanoate, methyl myristate, and tetradecane. Examples of the porogen further include liquids such as acetone, 2-ethylhexanol, and 1-bromonaphthalene.

In some cases, the above-described liquids may not serve as a porogen. The porogen is a liquid compatible with the polymerizable compound, as described above, and is a liquid which becomes incompatible (causes phase separation) with the resulting polymer (resin) in the process of polymerizing the polymerizable compound in the liquid composition. In other words, whether a certain liquid is a porogen is determined by a relationship with a polymerizable compound and a polymer (resin formed by polymerizing the polymerizable compound).

As described above, it is sufficient for the liquid composition to contain at least one kind of porogen having the above-described specific relationship with the polymerizable compound, and therefore, the liquid composition may additionally contain a liquid not having the above-described specific relationship with the polymerizable compound (liquid other than the porogen).

However, the content of the liquid not having the above-mentioned specific relationship with the polymerizable compound (liquid other than the porogen) is preferably 10.0% by mass or less, more preferably 5.0% by mass or less, still more preferably 1.0% by mass or less, and particularly preferably none, relative to the total amount of the liquid composition.

The content of porogen in the liquid composition is preferably 30.0% by mass or more and 95.0% by mass or less, more preferably 50.0% by mass or more and 90.0% by mass or less, and still more preferably 60.0% by mass or more and 80.0% by mass or less, relative to the total amount of the liquid composition.

If the content of the porogen is 30.0% by mass or more, the size of the pores in the resulting porous structure portion is not excessively small such as several nm or less, the porous structure portion has an appropriate porosity, and it is possible to suppress the tendency of the permeability of liquids and gases to lower, hence preferable.

If the content of the porogen is 95.0% by mass or less, a three-dimensional network structure of the resin is sufficiently formed, and as a result, the porous structure is sufficiently obtained, and the strength of the resulting porous structure portion also tends to improve, hence preferable.

If it is desired to obtain a resin having high hardness or scratch resistance and a porous structure portion formed from such a resin, the content of the polymerizable compound in the liquid composition is preferably 30.0% by mass or more and 70.0% by mass or less, more preferably, 30.0% by mass or more and 60.0% by mass or less, and further preferably, 30.0% by mass or more and 50.0% by mass or less, relative to the total amount of the liquid composition.

This is because when the content of the polymerizable compound relative to the total amount of the liquid composition is increased and the content of the porogen relative to the total amount of the liquid composition is reduced accordingly, it is possible to realize a resin having high hardness or scratch resistance and a porous structure portion formed from such a resin. If the liquid composition includes two types of a liquid composition A and a liquid composition B, it is sufficient that at least one of the liquid composition A and the liquid composition B has a porogen content in the liquid composition, which falls within the above-described range.

As the photo-radical polymerization initiator, a photo-radical generator may be used. For example, examples of the photo-radical polymerization initiator include, but are not limited to, Michler's ketone and benzophenone known under the trade names IRGACURE and DAROCURE. More specifically, examples of a compound that can be preferably used include, but are not limited to, benzophenone and an acetophenone derivative, such as α-hydroxy- or α-aminoacetophenone, 4-aroyl-1,3-dioxolane, benzyl ketal, 2,2-diethoxyacetophenone, p-dimethylaminoacetophen, p-dimethylaminopropiophenone, benzophenone, 2-chlorobenzophenone, pp'-dichlorobenzophene, pp'-bisdiethylaminobenzophenone, michler ketone, benzyl, benzoin, benzyl dimethyl ketal; tetramethylthiuram monosulfide, thioxanthone, 2-chlorothioxanthone, 2-methylthioxanthone, azobisisobutyronitrile, benzoin peroxide, di-tert-butyl peroxide, 1-hydroxycyclohexyl phenyl ketone, 2-hydroxy-2-methyl-1-phenyl-1-one, 1-(4-isopropylphenyl)-2-hydroxy-2-methylpropan-1-one, methyl benzoyl formate, benzoin isopropyl ether, benzoin methyl ether, benzoin ethyl ether, benzoin ether, benzoin isobutyl ether, benzoin n-butyl ether, benzoin n-propyl, 1-hydroxy-cyclohexyl-phenyl-ketone, 2-benzyl-2-dimethylamino-1-(4-morpholinophenyl)-butanone-1, 2,2-dimethoxy-1,2-diphenylethan-1-one, bis(η5-2,4-cyclopentadien-1-yl)-bis(2,6-difluoro-3-(1H-pyrrol-1-yl)-phenyl)titanium, bis(2,4,6-trimethylbenzoyl)-phenylphosphine oxide, 2-methyl-1[4-(methylthio)phenyl]-2-morifolinopropan-1-one, 2-hydroxy-2-methyl-1-phenyl-propan-1-one (DAROCURE 1173), bis(2,6-dimethoxybenzoyl)-2,4,4-trimethyl-pentylphosphine oxide, 1-[4-(2-hydroxyethoxy)-phenyl]-2-hydroxy-2-methyl-1-propan-1-one monoacylphosphine oxide, bisacylphosphine oxide or titanocene, fluorescein, anthraquinone, thioxanthones or xanthones, lophine dimer, a trihalomethyl compound or a dihalomethyl compound, an active ester compound, and organoboron compounds.

A photo-cross-linkable radical generator such as a bisazide compound may be used at the same time. Alternatively, in the case of polymerization by heat without the use of other means, a thermal polymerization initiator such as azobisisobutyronitrile (AIBN) which is a normal radical generator, may be used.

To obtain sufficient curing speed, the content of the polymerization initiator is preferably 0.05% by mass or more and 10.0% by mass or less, and more preferably 0.5% by mass or more and 5.0% by mass or less, when the total mass of the polymerizable compound is 100.0% by mass.

From the viewpoint of workability when applying the liquid composition, the viscosity at 25°C of the liquid composition is preferably 1.0 mPa s or more and 200.0 mPa s or less, more preferably 1.0 mPa s or more and 150.0 mPa s or less, still more preferably 1.0 mPa s or more and 30.0 mPa s or less, and particularly preferably 1.0 mPa·s or more and 25.0 mPa·s or less.

When the viscosity of the liquid composition is 1.0 mPa s or more and 200.0 mPa s or less, even in the case of applying the liquid composition to an inkjet method, it is possible to obtain good dischargeability. Here, it is possible to measure the viscosity by using a viscometer (RE-550L, manufactured by TOKI SANGYO).

Examples of the inorganic solid usable for the porous insulating layer include, but are not limited to, a ceramic such as alumina, silica, aluminum nitride, silicon nitride, cordierite, siaclone, mullite, steatite, yttria, zirconia, silicon carbide, or an inorganic solid electrolyte such as LLZ, LPS, LGPS, allodirodite. In particular, aluminum oxide and silica are preferable, and α-alumina is more preferable, from the viewpoint of insulation and heat resistance.

The liquid composition applied to the electrode mixture layer to form the inorganic solid layer preferably contains an inorganic solid material, a dispersion medium, a dispersant, and the like. From the viewpoint of forming a porous layer in the electrode mixture layer, the inorganic solid is preferably particles.

The particle refer to a solid with a relatively small particle diameter. The dispersion medium indicates a medium in which particles are dispersed. The particles have low solubility relative to the dispersion medium, for example, the solubility of the particles in the dispersion medium is less than 0.1% by mass.

An average particle diameter of the particles is preferably 50 nm to 1000 nm inclusive from the viewpoint of dispersion stability, more preferably 50 nm to 800 nm inclusive from the viewpoint of storage stability of the liquid composition, and more preferably 100 nm to 600 nm inclusive from the viewpoint of improving an ejection characteristic when forming a porous film by ejecting the liquid composition by inkjet.

Here, the average particle diameter is an average primary particle diameter (D50) at which the cumulative volume is 50% in the particle size distribution evaluated by a laser diffraction/scattering method.

The shape of the particles is not particularly limited, and examples thereof include, but are not limited to, rectangular, spherical, elliptical, cylindrical, egg-shaped, dogbone-shaped, and amorphous.

The dispersion medium used in the liquid composition of the present embodiment is an aqueous dispersion medium or a non-aqueous dispersion medium.

Any dispersion medium may be selected depending on particles to be used and a medium to be absorbed such as an active material layer.

The aqueous dispersion medium is not particularly limited, and examples thereof include, but are not limited to, water, a mixture of water and a highly polar solvent. Examples of the highly polar solvent include, but are not limited to, methanol, ethanol, propanol, butanol, pentanol, hexanol, ethylene glycol, hexylene glycol, NMP, DMSO, DMF, acetone, and THF. Each of the highly polar solvents may be used alone or in combination with others.

Examples of the non-aqueous dispersion medium is not particularly limited, and examples thereof include styrene, but are not limited to, styrene, toluene, xylene, methyl ethyl ketone, ethyl acetate, ethyl lactate, acetone, methanol, ethanol, n-propanol, isopropanol (IPA), n-butanol, isobutanol, tert-butanol, n-pentanol, n-hexanol, diacetone alcohol, N,N-dimethylsulfoxide (DMSO), N-methylpyrrolidone (NMP), tetrahydrofuran (THF), and hexylene glycol. Each of the non-aqueous dispersion media may be used alone or in combination with others.

The dispersant used in the liquid composition of the present embodiment refers to a compound having function of adsorbing or binding to the surface of particles to suppress aggregation of particles by electrostatic repulsion due to Coulomb force and steric hindrance due to molecular chains.

As the dispersant, there is no particular limitation, but from the viewpoint of improving the dispersibility of particles, a dispersant containing a polymer-based resin as a component (hereinafter may be referred to as "polymer-based dispersant") is preferably used.

As used herein, "polymer" means having a number average molecular weight (Mn) of 1,000 to 100,000 inclusive. Considering the viscosity of the liquid composition, the number average molecular weight (Mn) of the polymer-based dispersant is preferably from 1000 to 10000 inclusive, and more preferably 1000 to 5000 inclusive.

If the non-aqueous dispersion medium is used as the dispersion medium, the polymer-based dispersant preferably contains a resin having an acid anhydride group in a main chain from the viewpoint of having relatively low reactivity and availability without significantly affecting a battery characteristic. The acid anhydride group may act as an adsorption group to the surface of the particles.

In addition to acid anhydride groups, examples of the adsorption group for the polymer-based dispersant include, but are not limited to, a carboxylic acid ester group, an amide group, an epoxy group, and an ether group.

As the adsorption group for the polymer-based dispersant, considering the adsorption to inorganic particles such as alumina particles, boehmite particles, apatite particles, titanium oxide particles, and silica particles, in particular, acid anhydride group is preferable.

The liquid composition of the present embodiment may be produced using a dispersing device. Examples of the dispersing device include, but are not limited to, a stirrer, a ball mill, a bead mill, a ring mill, a high-pressure disperser, a rotary high-speed shearing device, and an ultrasonic disperser.

From the viewpoint of workability when applying the liquid composition, the viscosity at 25°C of the liquid composition is preferably 1.0 mPa s or more and 200.0 mPa s or less, more preferably 1.0 mPa s or more and 150.0 mPa s or less, still more preferably 1.0 mPa s or more and 30.0 mPa s or less, and particularly preferably 1.0 mPa·s or more and 25.0 mPa·s or less.

When the viscosity of the liquid composition is 1.0 mPa s or more and 200.0 mPa s or less, even in the case of applying the liquid composition to an inkjet method, it is possible to obtain good dischargeability. Here, it is possible to measure the viscosity by using a viscometer (RE-550L, manufactured by TOKI SANGYO).

### Formation of Porous Insulating Layer

A forming step of a porous insulating layer is a step in which an insulating property including an organic layer and/or an inorganic layer is imparted on an application target which is the first electrode. The porous insulating layer forming step (hereinafter referred to as "insulating layer forming step") includes a liquid application step in which the liquid composition is applied to the application target which is the first electrode, to form the liquid composition layer, and may include, if preferable, a step of irradiating the liquid composition with an active energy ray, and a removal step in which the solvent included in the liquid composition is removed.

### Liquid Application Step

The liquid application step is a step in which a liquid composition containing an organic and/or inorganic compound and a solvent or a dispersion liquid is applied to the application target which is the first electrode. The applied liquid composition preferably forms a liquid composition layer which is a liquid film of the liquid composition, on the application target.

A method of applying the liquid composition is not particularly limited, but examples thereof include, but are not limited to, spin coating, casting, micro gravure coating, gravure coating, bar coating, roll coating, wire bar coating, dip coating, slit coating, capillary coating, spray coating, nozzle coating, and various types of printing methods such as gravure printing, screen printing, flexo printing, offset printing, reverse printing, and inkjet printing. In particular, from the viewpoint of a feature of controlling a position where the liquid composition is applied, a liquid ejection method such as inkjet printing is preferable.

### Irradiation Step

The irradiation step is a step in which the liquid composition applied in the liquid application step is irradiated with an active energy ray. In particular, in the case of a liquid composition that causes polymerization-induced phase separation, in first irradiation step, the porosity of a finally manufactured porous resin is improved, and as a result, for example, performance of incorporating a fluid such as liquid or gas in the porous resin is improved.

Specifically, the liquid composition is irradiated with an active energy ray to form a porous precursor having a porous structure serving as a basis for forming a porous resin with high porosity.

Any active energy ray may be used as long as such energy ray can impart sufficient energy for the polymerization reaction of the polymerizable compound, there is no particular limitation, but example thereof may include, but are not limited to, ultraviolet rays, electron beams, α rays, β rays, γ rays, and X rays. In particular, the ultraviolet rays are preferable. If a high-energy light source is particularly used, the polymerization reaction may proceed without using a polymerization initiator.

The following is a reason why the porous precursor is formed by using the irradiation step, especially in a case where the polymerization-induced phase separation occurs in the liquid composition.

As described above, if the porous resin is formed by polymerization-induced phase separation, a structure, a property, and the like of the porous resin change depending on the polymerization conditions. For example, if the porous resin is formed under the condition that the polymerization of the polymerizable compound is accelerated by irradiating the liquid composition with active energy rays having a high irradiation intensity, there is a tendency that polymerization proceeds before sufficient phase separation is obtained to make it difficult to produce a porous resin with a high porosity.

Therefore, to form the porous resin having a high porosity, an active energy ray with an irradiation intensity that is not excessively high is used in the irradiation. Specifically, the irradiation intensity of the active energy rays is preferably 1 W/cm² or less, more preferably less than 300 mW/cm², and still more preferably 100 mW/cm² or less.

However, if the irradiation intensity of the active energy rays is excessively low, the phase separation proceeds excessively to make it easier for the porous structure to vary and coarsen, and furthermore, an irradiation time is prolonged, resulting in a decrease in productivity. As a result, the irradiation intensity is preferably 10 mW/cm² or more, and more preferably 30 mW/cm² or more.

### Removal Step

The removal step is a step in which a solvent or a dispersion liquid is removed from the liquid composition. A method for removing the solvent or the dispersion liquid is not particularly limited, and examples thereof include a method of removing the solvent or the dispersion liquid from the porous resin by heating. At this time, by heating under a reduced pressure, the removal of the solvent or dispersion liquid is more promoted, and it is possible to reduce a residual solvent or dispersion liquid in the formed insulating layer, hence preferable.

### Insulating Layer Manufacturing Device

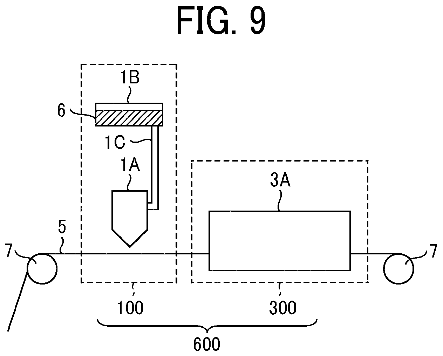

The above-described insulating layer forming step may be realized by an insulating layer manufacturing device illustrated in FIG. 9. An insulating layer manufacturing device 600 illustrated in FIG. 9 includes, a printing step unit 100 that performs a step of applying the liquid composition on a printing base material 5 to form the liquid composition layer, and a heating step unit 300 that performs a step of heating the printing base material 5 on which the liquid composition layer is formed to obtain the porous insulating layer.

The insulating layer manufacturing device 600 includes a transport unit 7 that transports the printing base material 5, and the transport unit 7 transports the printing base material 5 at a predetermined speed in the direction from the printing step unit 100 to the heating step unit 300.

The printing step unit 100 includes a printing device 1A, which is an example of applying means for realizing the application step in which the liquid composition is applied onto the printing base material 5, a storage container 1B that contains the liquid composition, and a supply tube 1C for supplying the liquid composition stored in the storage container 1B to the printing device 1A.

The printing device 1A is not particularly limited as long as it is possible to apply the liquid composition 6, and examples thereof include, but are not limited to, any device employing spin coating, casting, micro gravure coating, gravure coating, bar coating, roll coating, wire bar coating, dip coating, slit coating, capillary coating, spray coating, nozzle coating, or a printing method such as gravure printing, screen printing, flexo printing, offset printing, reverse printing, and inkjet printing.

The storage container 1B contains the liquid composition 6, and the printing step unit 100 discharges the liquid composition 6 from the printing device 1A and applies the liquid composition 6 onto the printing base material 5 to form a liquid composition layer in a thin film form.

The storage container 1B may be integrated with the insulating layer manufacturing device 600, or may be removable from the insulating layer manufacturing device 600. The storage container 1B may be a container used for addition to a storage container integrated with the insulating layer manufacturing device 600 or a storage container removable from the insulating layer manufacturing device 600.

Any storage container 1B and supply tube 1C which can stably store and supply the liquid composition 6, may be selected. A material forming the storage container 1B and the supply tube 1C preferably has a light-shielding property in a relatively short wavelength region of ultraviolet and visible light. In such a case, the liquid composition 6 is prevented from starting a polymerization by external light.

In the printing step unit 100, a method of adjusting a thickness of the liquid composition layer formed on the printing base material 5 is not particularly limited. Examples of the method of adjusting the thickness of the liquid composition layer include, but are not limited to, a method of changing an ink landing density and a method of changing an amount of ink to be ejected.

As illustrated in FIG. 9, the heating step unit 300 includes a heating device 3A, and performs the solvent removal step in which a solvent remaining in the liquid composition layer formed by the printing step unit 100 is removed by heating and drying with the heating device 3A. As a result, it is possible to form the porous resin. The heating step unit 300 may implement the solvent removal step under a reduced pressure.

The heating step unit 300 also includes, after the solvent removal step, a heating printing completion step in which the porous is heated under a reduced pressure. The heating device 3A is not particularly limited as long as the heating device 3A satisfies the above-described functions, and examples thereof include, but are not limited to, an IR (infrared) heater and a hot air heater.

It is possible to appropriately select a heating temperature and a time period according to the boiling point of the solvent included in the liquid composition layer or the thickness of the formed film.

The printing base material 5 may be made of any material regardless of whether the material is transparent or opaque. That is, as a transparent base material, a glass base material, a resin film base material such as various types of plastic films, and a composite base material made of such materials may be used, and an opaque base material, various types of base materials such as a silicon base material, a metal base material such as stainless steel, or a laminate of such materials may be used.

The printing base material 5 may be a recording medium such as plain paper, glossy paper, special paper, or cloth. As the recording medium, a low-permeability base materials (low-absorptivity base material) may be used.

The low-permeability base material means a base material having a surface with a low level of moisture permeability, absorptivity, or adsorption, and includes a material having many cavities inside but having no outward opening. Examples of the low-permeability base material include, but are not limited to, a recording medium such as coated paper used for commercial printing, and a paperboard including a middle layer and a back layer containing waste paper pulp and a coated surface.

The printing base material 5 may be a porous resin sheet used as an insulating layer for an electric power storage element or an electric power generation element.

A shape of the printing base material 5 is not particularly limited, and any base material applicable to the printing step unit 100 may be used irrespective of having a curved surface or an uneven shape.

In the insulating layer manufacturing device 600, after the steps performed by the printing step unit 100 to the heating step unit 300 are completed, the steps performed by the printing step unit 100 to the heating step unit 300 may be repeated one or more times. Alternatively, after the printing step unit 100, the printing step unit 100 is repeated one or more times, and then, the processing may proceed to the heating step unit 300.

In the insulating layer manufacturing device 600, when the first film thickness layer 10A and the second film thickness layer 10B of the insulating layer 10 are formed, the first film thickness layer 10A and the second film thickness layer 10B may be simultaneously formed in single processing of the printing step unit 100. The printing step unit 100 may be divided into two processing, and the first film thickness layer 10A may be formed in the first printing step unit 100 and the second film thickness layer 10B may be formed in the second printing step unit 100.

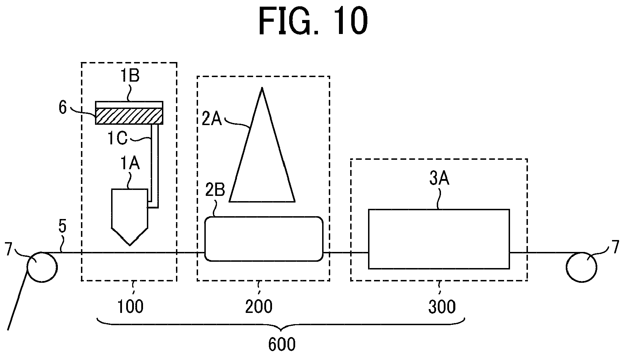

The above-described insulating layer forming step may also be realized by an insulating layer manufacturing device illustrated in FIG. 10. In FIG. 10, components common to those in FIG. 9 are denoted by the same or corresponding reference numerals, and description thereof is omitted. The insulating layer manufacturing device 600 illustrated in FIG. 10 further includes, between the printing step unit 100 and the heating step unit 300, a polymerization step unit 200 including a polymerization step in which a porous resin precursor is obtained by activating a polymerization initiator of the liquid composition layer and polymerizing a polymerizable compound.

As illustrated in FIG. 10, the polymerization step unit 200 includes a light irradiation device 2A, which is an example of a curing means that realizes a curing step in which the liquid composition is irradiated with an active energy ray such as heat or light to cure the liquid composition, and a polymerization inert gas circulating device 2B that circulates a polymerization inert gas. The light irradiation device 2A irradiates, with light, the liquid composition layer formed by the printing step unit 100 in the presence of a polymerization-inactive gas for photopolymerization to obtain the porous resin precursor.

The light irradiation device 2A is appropriately selected according to an absorption wavelength of the photopolymerization initiator included in the liquid composition layer, and is not particularly limited as long as it is possible to initiate and progress the polymerization of a compound in the liquid composition layer, and examples thereof include, but are not limited to, an ultraviolet light source such as a high-pressure mercury lamp, a metal halide lamp, a hot cathode tube, a cold cathode tube, and LED. However, light with a shorter wavelength generally tends to reach deeper areas, and thus, it is preferable to select the light source according to the thickness of the porous film to be formed.

Next, regarding an irradiation intensity of the light source of the light irradiation device 2A, if the irradiation intensity is excessively strong, polymerization progresses rapidly before sufficient phase separation occurs, and thus, there is a tendency that it is difficult to obtain the porous structure. If the irradiation intensity is excessively weak, phase separation progresses beyond the microscale and variation and coarsening of porosity are likely to occur. In addition, the use of excessively weak irradiation intensity prolongs irradiation time, decreasing the productivity. Therefore, the irradiation intensity is preferably 10 mW/cm² or more and 1 W/cm² or less, and more preferably 30 mW/cm² or more and 300 mW/cm² or less.

Next, the polymerization inert gas circulating device 2B serves to reduce the concentration of polymerization active oxygen included in the atmosphere, and promote the polymerization reaction of the polymerizable compound in the vicinity of the surface of the liquid composition layer without hindrance. Therefore, the polymerization-inactive gas used is not particularly limited as long as such a gas satisfies the above-described functions, and examples thereof include, but are not limited to, nitrogen gas, carbon dioxide gas, and argon gas.

Considering that it is possible to effectively obtain the hindrance reduction effect, the flow rate preferably has an O₂ concentration of less than 20% (an environment with a lower oxygen concentration than the atmosphere), more preferably 0% or more and 15% or less, and still more preferably 0% or more and 5% or less. To realize a stable polymerization progress condition, the polymerization inert gas circulating device 2B preferably includes a temperature adjustment unit that controls a temperature.

In the heating step unit 300, in the solvent removal step, a solvent remaining in the porous resin precursor formed by the polymerization step unit 200 is removed by heating and drying with the heating device 3A. As a result, it is possible to form the porous resin.

The heating step unit 300 performs a polymerization acceleration step in which a porous film precursor is heated with the heating device 3Ato further accelerate the polymerization reaction performed in the polymerization step unit 200, and an initiator removal step in which a photopolymerization initiator remaining in the porous film precursor is removed by heating and drying by the heating device 3A. The polymerization acceleration step and the initiator removal step may not be implemented at the same time as the solvent removal step, but may be implemented before or after the solvent removal step.

The heating step unit 300 also performs, after the solvent removal step, a polymerization completion step in which the porous is heated under a reduced pressure. The heating device 3A is not particularly limited as long as the heating device 3A satisfies the above-described functions, and examples thereof include, but are not limited to, an IR heater and a hot air heater.

In the insulating layer manufacturing device 600 including the polymerization step unit 200, after the steps performed by the printing step unit 100 to the heating step unit 300 are completed, the steps performed by the printing step unit 100 to the heating step unit 300 may be repeated one or more times. Alternatively, after the printing step unit 100, the steps performed by the printing step unit 100 to the polymerization step unit 200 is repeated one or more times, and then, the processing may proceed to the heating step unit 300.

In the insulating layer manufacturing device 600, when the first film thickness layer 10A and the second film thickness layer 10B of the insulating layer 10 are formed, in a single execution of the steps from the printing step unit 100 to the polymerization step unit 200, the first film thickness layer 10A and the second film thickness layer 10B may be simultaneously formed.

Alternatively, the steps from the printing step unit 100 to the polymerization step unit 200 may be performed at least two times. In this case, the first film thickness layer 10A may be formed in the first execution of the steps from the printing step unit 100 to the polymerization step unit 200 and the second film thickness layer 10B may be formed in the second execution of the steps from the printing step unit 100 to the polymerization step unit 200.

### Electrode Element

An electrode element according to the present embodiment is an electrode element in which a positive electrode and a negative electrode are laminated in a state of being insulated from each other. At least one of the positive electrode and the negative electrode included in the electrode element includes an electrode on which the insulating layer described above is formed. In the present embodiment, as an example of the electrode element, an electrode laminate for a power storage element including the two first electrodes 5 and the second electrode 11 is provided (FIGS. 6 to 8).

In the electrode laminate for a power storage element, the first electrodes 5 serve as the positive electrode, the second electrode 11 serves as the negative electrode, the second electrode 11, which is a facing electrode, is sandwiched and laminated between the two first electrodes 5. As a result, between the first electrodes 5 and the second electrode 11, the insulating layer 10 (the first film thickness layer 10A and the second film thickness layer 10B) formed on each first electrode 5 is arranged (FIGS. 6 to 8).

In the electrode element of the present embodiment, the first electrode 5 including the insulating layer 10 described above is used, and thus, it is possible to obtain an effect similar to that of the first electrode 5.

That is, in the electrode element of the present embodiment, as illustrated in FIGS. 1 to 6, when a plurality of electrodes are layered, the second electrode 11 is sandwiched between the first electrodes 5, and thus, lamination misalignment due to vibration or impact is less likely to occur. Even if such lamination misalignment occurs, the film thickness of the porous insulating layer is thick and the distance between the electrodes is long, and thus, the risk of short circuit is reduced, and the effect of improving safety may be expected.

The configuration where the first electrode 5 includes the insulating layer is described above, but in the electrode according to the present embodiment, each of the first electrode 5 and the second electrode 11, which is the electrode facing to the first electrode 5, may include the insulating layer.

### Electrochemical Element

The electrochemical element according to the present embodiment includes the electrode in which the above-described insulating layer is formed. In the present embodiment, as an example of the electrochemical element, the electrode element described above is provided in a lithium ion secondary battery which is a type of power storage device.

The lithium ion secondary battery (hereinafter may be referred to as "lithium ion battery") is one of the electrochemical elements, and is classified as a non-aqueous electrolyte battery in which a solution including an ion-conducting lithium salt dissolved in an electrolyte solution such as a non-aqueous solvent, is used as an electrolyte solution.

The lithium ion secondary battery of the present embodiment includes a manufacturing step in which an electrode is manufactured by using the electrode manufacturing method described above.

The lithium ion secondary battery of the present embodiment is not particularly limited in design as long as the above-described electrode is provided. The lithium ion secondary battery includes an electrode element, an electrolyte layer formed on the electrode element, an exterior housing that contains the electrode element and the electrolyte layer, and seals an interior, and a lead wire connected to the electrode element and drawn to outside of the exterior housing, for example.

In an electrode element, a negative electrode and a positive electrode are laminated with a separator interposed therebetween. Here, the positive electrode is laminated on both sides of the negative electrode. A negative electrode substrate is connected with a negative electrode lead wire and a positive electrode substrate is connected with a positive electrode lead wire.

In the negative electrode, a negative electrode active material layer and the porous insulating layer are sequentially formed on both sides of the negative electrode substrate.

In the positive electrode, positive electrode active material layers are formed on both sides of the positive electrode substrate. Here, the positive electrode active material layer and the porous insulating layer may be formed sequentially on both sides of the positive electrode substrate. In such a case, the porous insulating layer may be omitted if preferable.

The number of layers of the negative electrode and the positive electrode in the electrode element is not particularly limited. The number of negative electrodes and the number of positive electrodes in the electrode element may be the same or different.

The lithium ion battery may include other members, if desired.

There are no particular limitation on the shape of the lithium ion battery, and examples of the shape thereof include, but are not limited to, a laminate type, a cylinder type in which a sheet electrode and a separator are formed in a spiral shape, a cylinder type having an inside-out structure in which a pellet electrode and a separator are combined, and a coin type in which a pellet electrode and a separator are laminated on one another.

The electrolyte layer includes a non-aqueous electrolyte. The non-aqueous electrolyte solution is an electrolyte solution in which an electrolyte salt is dissolved in a non-aqueous solvent. Examples of the non-aqueous electrolyte include, but are not limited to, a solid electrolyte and a non-aqueous electrolyte solution.

The non-aqueous solvent is not particularly limited, and for example, an aprotic organic solvent is preferably used. Examples of the aprotic organic solvent that may be used include, but are not limited to, carbonate-based organic solvents such as chain carbonates and cyclic carbonates. In particular, chain carbonates have a high ability for dissolving electrolyte salts and are thus preferably used. The aprotic organic solvent preferably has low viscosity.

Examples of the chain carbonates include, but are not limited to, dimethyl carbonate (DMC), diethyl carbonate (DEC), and methyl ethyl carbonate (EMC).

The content of chain carbonate in the non-aqueous solvent is preferably 50% by mass or more. If the content of the chain carbonates is 50% by mass or more in the non-aqueous solvent, even when a non-aqueous solvent other than the chain carbonates is a cyclic substance having a high dielectric constant (for example, a cyclic carbonate or a cyclic ester), the content of the cyclic substance is low. Therefore, even if a non-aqueous electrolyte solution having a high concentration of 2M or more is prepared, the viscosity of the non-aqueous electrolyte solution is low, and thus, excellent permeation of the non-aqueous electrolyte solution into the electrode and ion diffusion are obtained.

Examples of the cyclic carbonates include, but are not limited to, propylene carbonate (PC), ethylene carbonate (EC), butylene carbonate (BC), and vinylene carbonate (VC).

Examples of non-aqueous solvents other than the carbonate-based organic solvents include, but are not limited to, ester-based organic solvents such as cyclic esters and chain esters, and ether-based organic solvents such as cyclic ethers and chain ethers.

Examples of the cyclic esters include, but are not limited to, γ-butyrolactone (yBL), 2-methyl-γ-butyrolactone, acetyl-γ-butyrolactone, and γ-valerolactone.

Examples of the chain esters include, but are not limited to, propionic acid alkyl esters, malonic acid dialkyl esters, acetic acid alkyl esters (for example, methyl acetate (MA) and ethyl acetate), and formic acid alkyl esters (for example, methyl formate (MF) and ethyl formate).

Examples of the cyclic ethers include, but are not limited to, tetrahydrofuran, alkyltetrahydrofuran, alkoxytetrahydrofuran, dialkoxytetrahydrofuran, 1,3-dioxolane, alkyl-1,3-dioxolane, and 1,4-dioxolane.

Examples of the chain ethers include, but are not limited to, 1,2-dimethoxyethane (DME), diethyl ether, ethylene glycol dialkyl ether, diethylene glycol dialkyl ether, triethylene glycol dialkyl ether, and tetraethylene glycol dialkyl ether.

The electrolyte salt is not particularly limited, as long as the electrolyte salt has high ion conduction and can be dissolved in a non-aqueous solvent. The electrolyte salt preferably contains a halogen atom.

An example of the cations included in the electrolyte salt includes, but is not limited to, lithium ions. That is, examples of the electrolyte salt include a lithium salt. The lithium salt is not particularly limited and may be appropriately selected depending on the purpose.

Examples of the lithium salt include, but are not limited to, lithium hexafluorophosphate (LiPF₆), lithium fluoroborate (LiBF₄), lithium hexafluoroarsenate (LiAsF₆), lithium trifluoromethanesulfonate (LiCF₃SO₃), lithium bis(trifluoromethylsulfonyl)imide (LiN(CF₃SO₂)₂), and lithium bis(pentafluoroethylsulfonyl)imide (LiN(C₂F₅SO₂)2). In particular, LiPF₆ is preferable from the viewpoint of ion conduction, and LiBF₄ is preferable from the viewpoint of stability.

Examples of anions of the electrolyte salt include, but are not limited to, BF₄⁻, PF₆⁻, AsF₆⁻, CF₃SO₃⁻, (CF₃SO₂)₂N⁻, and (C₂F₅SO₂)₂N⁻.

A single type of electrolyte salt may be used alone or two or more types of electrolyte salts may be used in combination.

The concentration of the electrolyte salt in the non-aqueous electrolyte solution may be appropriately selected according to a purpose. If the lithium ion battery is a swing type, the concentration is preferably 1 mol/L to 2 mol/L inclusive, and if the lithium ion battery is a reserve type, the concentration is preferably 2 mol/L to 4 mol/L inclusive.

There are no particular limitation on the application of the lithium ion secondary battery, and examples of the application include, but are not limited to, a laptop computer, a pen input personal computer, a mobile personal computer, an electronic book player, a cellular phone, a portable facsimile machine, a portable copier, a portable printer, a headphone stereo, a video movie recorder, a liquid crystal display television, a handy cleaner, a portable CD player, a mini disk player, a transceiver, an electronic organizer, a calculator, a memory card, a portable tape recorder, a radio, a backup power source, a motor, an illumination apparatus, a toy, a game machine, a clock, an electronic flash, and a camera.

In the present embodiment, the above-described electrode element (electrode element including the first electrode 5 of the above-described insulating layer 10) is used, it is possible to obtain an effect similar to that of the first electrode 5.

That is, in the electrochemical element (power storage device) of the present embodiment, as illustrated in FIGS. 1 to 6, when a plurality of electrodes are layered, the second electrode 11 is sandwiched between the first electrodes 5, and thus, lamination misalignment due to vibration or impact is less likely to occur. Even if such lamination misalignment occurs, the film thickness of the porous insulating layer is thick and the distance between the electrodes is long, and thus, the risk of short circuit is reduced, and the effect of improving safety may be expected.

### EXAMPLES

### Preparation of Resin-Forming Liquid Composition

A resin-forming liquid composition was prepared by mixing materials with the proportions shown below.

### - Resin-forming liquid composition (Resin 1) -

29.0% by mass of tricyclodecanedimethanol diacrylate (manufactured by DAICEL-ALLNEX LTD.) as a polymerizable compound, 70.0% by mass of dipropylene glycol monomethyl ether (manufactured by Kanto Chemical Industry Co., Ltd.) as a porogen, and 1.0% by mass of a polymerization initiator (manufactured by BASF, IrgacureR 184) were mixed to obtain a liquid composition for a rein 1.

### -Resin 2-

39.0% by mass of a polymerizable compound (EBECRYL8R 402, manufactured by DAICEL-ALLNEX LTD.), 60.0% by mass of diisobutyl ketone (manufactured by Kanto Chemical Industry Co., Ltd.) as a porogen, and 1.0% by mass of a polymerization initiator (manufactured by BASF, IrgacureR 819) were mixed to obtain a liquid composition for a rein 2.

### Preparation of Inorganic Solid Forming Liquid Composition

A pre-dispersion liquid in which materials are mixed in the proportion shown below was dispersed according to the following procedure to prepare an inorganic solid forming liquid composition.

### -Inorganic Solid Forming Liquid Composition-

A pre-dispersion liquid in which 40.0% by mass of α-alumina (having a primary particle diameter (D50) of 0.5 µm and a specific surface area of 7.8 g/m2) as an inorganic solid, 58.0% by mass of a mixed solution of dimethyl sulfoxide and ethylene glycol (DMSO-EG), and 2.0% by mass of a dispersant (manufactured by NOF Corporation, malialimR HKM-150A) were mixed, was prepared.

Such a pre-dispersion liquid was placed in a container together with zirconia beads (Φ2 mm), a dispersion treatment was performed for 3 minutes at 1500 rpm with a frozen nano-pulverizer NP-100 (manufactured by Thinky Corporation), and as a result, a dispersion liquid was obtained. The zirconia beads were removed from the resulting dispersion liquid by using a 25-µm mesh filter to prepare the liquid composition.

### Preparation of Negative Electrode

For formation of a negative electrode mixture layer, 97.0% by mass of graphite, 1.0% by mass of a thickening agent (carboxymethylcellulose), 2.0% by mass of polymer (styrene-butadiene rubber), and 100.0% by mass of water as a solvent were added to prepare a negative electrode paint.

The negative electrode paint is applied to both sides of a copper foil substrate and dried to obtain a negative electrode in which the weight per unit area of the negative electrode mixture layer on one side is 9.0 mg/cm2. Next, the resultant negative electrode was pressed with a roll press machine so that a deposition density of the electrode is 1.6 g/cm3 to obtain a negative electrode to be used. A total film thickness of the negative electrode at this time was 112.0 µm.

### Preparation of Positive Electrode

92.0% by mass of lithium nickel oxide (NCA) as a positive electrode active material, 3.0% by mass of acetylene black as a conductive material, 5.0% by mass of polyvinylidene fluoride (PVDF) as a binder were prepared and dispersed in N-methylpyrrolidone (NMP) to produce a positive electrode paint.

The positive electrode paint is applied to both sides of an aluminum foil substrate and then dried to obtain a positive electrode in which the weight per unit area of the positive electrode mixture layer on one side is 15.0 mg/cm2. Next, the resultant positive electrode was pressed with a roll press machine so that a volume density of the electrode is 2.8 g/cm3 to obtain a positive electrode to be used. A total film thickness of the positive electrode at this time was 132.0 µm.

### Formation of Porous Insulating Layer

### Example 1

The liquid composition for resin 1 was filled in an inkjet ejection device equipped with an inkjet head (GEN5 head manufactured by Ricoh Printing Systems Co., Ltd.). A coating region having a shape of the pattern image illustrated in FIG. 1 was formed on the negative electrode. A discharge amount of the liquid composition was controlled so that the insulating layer in a first region and the insulating layer in a second region have the following configuration.
Insulating layer in first region, area: 47.0 mm × 27.0 mm, film thickness: 20.0 µm
Insulating layer in second region, area: other than insulating layer in first region, film thickness: 26.0 µm

Immediately thereafter, in N₂ atmosphere, UV irradiation (light source: UV-LED (manufactured by Phoseon, FJ800), wavelength: 365 nm, irradiation intensity: 30 mW/cm2, irradiation time: 20 s) was applied to the coating region to cure the coating region. Next, the cured product was heated at 120°C for 1 minute by using a hot plate to remove the porogen to obtain a porous insulating layer.

### Examples 2 to 5

Negative electrodes on which porous insulating layers of Examples 2 to 5 were formed were obtained in much the same way as in Example 1, except that the thickness of the insulating layer in the second region in Example 1 was changed to those shown in Table 1.

### Example 6

The liquid composition for resin 1 was filled in an inkjet ejection device equipped with a GEN5 head, the liquid composition was discharged onto the negative electrode base material to form a solid image-like coating region having a film thickness of 20.0 µm. Immediately thereafter, in N₂ atmosphere, UV irradiation (light source: UV-LED (manufactured by Phoseon, Product Name: FJ800), wavelength: 365 nm, irradiation intensity: 30 mW/cm2, irradiation time: 20 s) was applied to the coating region to cure the coating region. Next, the cured product was heated at 120°C for 1 minute by using a hot plate to remove the porogen.

Subsequently, the liquid composition for resin 2 was filled in an inkjet ejection device equipped with a GEN5 head. The liquid composition was discharged onto a region excluding the area of 47.0 mm × 27.0 mm of the negative electrode on which the resin 1 having a thickness of 20.0 µm was formed, to form a coating region having a shape of the pattern image illustrated in FIG. 1. The film thickness of the insulating layer in the second region was 55.0 µm. Immediately thereafter, in N₂ atmosphere, UV irradiation (light source: UV-LED (manufactured by Phoseon, Product Name: FJ800), wavelength: 365 nm, irradiation intensity: 30 mW/cm2, irradiation time: 20 s) was applied to the coating region to cure the coating region. After the curing, the cured product was heated at 120°C for 1 minute by using a hot plate to remove the porogen to obtain a porous insulating layer.

### Example 7

Negative electrodes on which porous insulating layers of Example 7 was formed were obtained in much the same way as in Example 6, except that the thickness of the insulating layer in the second region in Example 6 was changed to those shown in Table 1.

### Example 8

The liquid composition for resin 1 was filled in an inkjet ejection device equipped with a GEN5 head, the liquid composition was discharged onto the negative electrode base material to form a solid image-like coating region having a film thickness of 20.0 µm. Immediately thereafter, in N₂ atmosphere, UV irradiation (light source: UV-LED (manufactured by Phoseon, Product Name: FJ800), wavelength: 365 nm, irradiation intensity: 30 mW/cm2, irradiation time: 20 s) was applied to the coating region to cure the coating region. Next, the cured product was heated at 120°C for 1 minute by using a hot plate to remove the porogen.

Subsequently, the liquid composition for inorganic solid was filled in an inkjet ejection device equipped with a GEN5 head. The liquid composition was discharged onto a region excluding the area of 47.0 mm × 27.0 mm of the negative electrode on which the resin 1 having a thickness of 20.0 µm was formed, to form a coating region having a shape of the pattern image illustrated in FIG. 1. The total film thickness of the insulating layer in the second region was 26.0 µm. The resultant electrode was heated at 120°C for 1 minute by using a hot plate to remove the dispersion medium to obtain a porous insulating layer.

### Examples 9 to 11

Negative electrodes on which porous insulating layers of Examples 9 to 11 were formed were obtained in much the same way as in Example 8, except that the thickness of the insulating layer in the second region in Example 8 was changed to those shown in Table 1.

### Example 12

The liquid composition for inorganic solid was filled in an inkjet ejection device equipped with a GEN5 head. A coating region having a shape of the pattern image illustrated in FIG. 1 was formed on the negative electrode. A discharge amount of the liquid composition was controlled so that the insulating layer in a first region and the insulating layer in a second region have the following configuration.
Insulating layer in first region, area: 47.0 mm × 27.0 mm, film thickness: 20.0 µm
Insulating layer in second region, area: other than insulating layer in first region, film thickness: 27.0 µm

Next, the cured product was heated at 120°C for 1 minute by using a hot plate to remove the dispersion medium to obtain a porous insulating layer.

### Examples 13 to 15

Negative electrodes on which porous insulating layers of Examples 13 to 15 were formed were obtained in much the same way as in Example 12, except that the thickness of the insulating layer in the second region in Example 12 was changed to those shown in Table 1.

### Comparative Example 1

The liquid composition for resin 1 was filled in an inkjet ejection device equipped with a GEN5 head, the liquid composition was discharged onto the negative electrode base material to form a solid image-like coating region having a film thickness of 8.0 µm. Immediately thereafter, in N₂ atmosphere, UV irradiation (light source: UV-LED (manufactured by Phoseon, Product Name: FJ800), wavelength: 365 nm, irradiation intensity: 30 mW/cm2, irradiation time: 20 s) was applied to the coating region to cure the coating region. Next, the cured product was heated at 120°C for 1 minute by using a hot plate to remove the porogen to obtain a porous insulating layer.

### Comparative Examples 2 to 5

Negative electrodes on which porous insulating layers of Comparative Examples 2 to 5 were formed were obtained in much the same way as in Comparative Example 1, except that the thickness in Comparative Example 1 was changed to those shown in Table 1.

### Comparative Example 6

Negative electrodes on which porous insulating layers of Comparative Example 6 were formed were obtained in much the same way as in Example 12, except that the thickness of the insulating layer in the second region in Example 12 was changed to those shown in Table 1.

### Punching of Negative Electrode

The negative electrode on which the porous insulating layer was formed was punched out by using a die punching machine (punching area: 50.0 mm × 30.0 mm) so that the first film thickness layer was positioned at the center.

### Punching of Positive Electrode

The positive electrode was punched out by using a die punching machine (punching area: 47.0 mm × 27.0 mm).

### Production of Battery

The porous insulating layer-formed negative electrode and positive electrode, which were punched with a die, were laminated to face each other, and subjected to vacuum drying at 120°C to remove a residual moisture. It was found that the laminate produced in Example 7 exhibited adhesiveness in the insulating layer in the second region, and an integrated laminate was obtained.

An electrolyte solution was injected, and the laminate was sealed using a laminate exterior material as an exterior housing to produce a power storage element. The electrolyte solution that was used is a solution including 1.5 mol/L of LiPF6, which is an electrolyte, in a mixture of ethylene carbonate (EC) and dimethyl carbonate (DMC) (mixture having a mass ratio of "EC:DMC = 1:1").

### Short circuit at End by Pressing Positive Electrode (Evaluation 1)

The positive electrode was pressed against an end of the porous insulating layer-formed negative electrode punched out by a die, and whether short-circuit occurred between the positive and negative electrodes was checked using a digital multimeter. A criterion for determining whether the short-circuit occurred was based on whether a resistance value (less than 30 MΩ) was displayed on a digital multimeter.
A: Resistance value is not displayed (30 MΩ or more)
B: Resistance value is displayed (less than 30 MΩ)
Battery Output Characteristic (Evaluation 2)

The positive electrode lead wire and the negative electrode lead wire of the produced battery were connected to a charge/discharge test device, the battery was charged at a constant current and a constant voltage with a maximum voltage of 4.2 V and a current rate of 0.2 C for 5 hours, and was then left to stand in a constant temperature bath at 40°C for 5 days after charging was completed. After that, the battery was discharged to 2.5 V at a constant current with a current rate of 0.2 C. After that, the battery was charged at a constant current and a constant voltage with a maximum voltage of 4.2 V and a current rate of 0.2 C for 5 hours, followed by a pause of 10 minutes, and was then discharged to 2.5 V at a constant current with a current rate of 0.2 C. The discharge capacity at that time was defined as an initial capacity.

The positive electrode lead wire and the negative electrode lead wire of the battery for which the initial capacity was measured as described above were connected to a charge/discharge test device to charge the battery with a maximum voltage of 4.2 V and at a current rate of 0.2 C for 5 hours. After a pause of 10 minutes, the battery was discharged at a constant current with a current rate of 0.2 C for 2.5 hours so that a depth of charge of the lithium ion battery was 50%.

Next, a pulse with a current rate of 0.2C to 5.0C inclusive was used to discharge the battery for 10 seconds, a power applied to reach a cutoff voltage of 2.5 V from a correlation straight line between a voltage after the pulse and a current value was calculated, and an output characteristic was calculated by division with the cell weight.

The output characteristic changes depending on the material of the first film thickness layer, and thus, the determination was performed according to the following criteria by using Comparative Example 3 as a reference for Examples 1 to 11 and Comparative Examples 1, 2, 4, and 5, and Comparative Example 6 as a reference for Examples 12 to 15.
A: Reference ratio of 98% or more
B: Reference ratio less than 98%

**Table 1**

| EX/Com . EX | Film thickness of insulating layer in first region | Materia l | Film thickness of insulating layer in second region | Materia l | Evaluatio n 1 [short circuit at end] | Evaluation 2 [Output Characteristic] |
|---|---|---|---|---|---|---|
| Ex. 1 | 20.0 µm | Resin 1 | 26.0 µm | Resin 1 | A | B relative to Com. Ex. 3 |
| Ex. 2 | 20.0 µm | Resin 1 | 36.0 µm | Resin 1 | A | B relative to Com. Ex. 3 |
| Ex. 3 | 20.0 µm | Resin 1 | 40.0 µm | Resin 1 | A | B relative to Com. Ex. 3 |
| Ex. 4 | 20.0 µm | Resin 1 | 47.0 µm | Resin 1 | A | B relative to Com. Ex. 3 |
| Ex. 5 | 20.0 µm | Resin 1 | 86.0 µm | Resin 1 | A | B relative to Com. Ex. 3 |
| Ex. 6 | 20.0 µm | Resin 1 | 55.0 µm | Resin 2 | A | B relative to Com. Ex. 3 |
| Ex. 7 | 20.0 µm | Resin 1 | 86.0 µm | Resin 2 | A | B relative to Com. Ex. 3 |
| Ex. 8 | 20.0 µm | Resin 1 | 26.0 µm | α alumina | A | B relative to Com. Ex. 3 |
| Ex. 9 | 20.0 µm | Resin 1 | 36.0 µm | α alumina | A | B relative to Com. Ex. 3 |
| Ex. 10 | 20.0 µm | Resin 1 | 40.0 µm | α alumina | A | B relative to Com. Ex. 3 |
| Ex. 11 | 20.0 µm | Resin 1 | 47.0 µm | α alumina | A | B relative to Com. Ex. 3 |
| Ex. 12 | 20.0 µm | α alumina | 27.0 µm | α alumina | A | B relative to Com. Ex. 6 |
| Ex. 13 | 20.0 µm | α alumina | 33.0 µm | α alumina | A | B relative to Com. Ex. 6 |
| Ex. 14 | 20.0 µm | α alumina | 40.0 µm | α alumina | A | B relative to Com. Ex. 6 |
| Ex. 15 | 20.0 µm | α alumina | 45.0 µm | α alumina | A | B relative to Com. Ex. 6 |
| Com. Ex. 1 | 8.0 µm | Resin 1 | 8.0 µm | Resin 1 | B | A relative to Com. Ex. 3 |
| Com. Ex. 2 | 15.0 µm | Resin 1 | 15.0 µm | Resin 1 | B | A relative to Com. Ex. 3 |
| Com. Ex. 3 | 20.0 µm | Resin 1 | 20.0 µm | Resin 1 | B | Reference |
| Com. Ex. 4 | 26.0 µm | Resin 1 | 26.0 µm | Resin 1 | A | B relative to Com. Ex. 3 |
| Com. Ex. 5 | 36.0 µm | Resin 1 | 36.0 µm | Resin 1 | A | B relative to Com. Ex. 3 |
| Com. Ex. 6 | 20.0 µm | α alumina | 20.0 µm | α alumina | B | Reference |

According to Table 1, in Examples 1 to 5, no short-circuit was detected when the positive electrode was pressed against the end, and in addition, the characteristic of the battery using the negative electrode showed performance equivalent to that of Comparative Example 3 used as a reference. It is considered that these effects are realized because the insulating layer in the first region, which faces the positive electrode, is the same as the reference, and the insulating layer in the second region around the negative electrode end increases in thickness.

Examples 6 to 11, which are the negative electrodes in which the insulating layer in the second region is formed by two layers made of different materials, had the same evaluation result of the short circuit at the end and result of the output characteristic evaluation as those in Examples 1 to 5, which shows that the same effect can be obtained even if the material is changed.

In Examples 12 to 15 also, no short-circuit was detected when the positive electrode was pressed against the end, and in addition, the characteristic of the battery using the negative electrode showed performance equivalent to that of Comparative Example 6 used as a reference.

In Comparative Examples 1 and 2, as a result of the insulating layer in the first region decreasing in thickness, the output characteristics were better than Comparative Example 3 used as a reference, but a short circuit occurred when the facing electrode was pressed against the end. In Comparative Examples 4 and 5, no short circuit at the end as a result of the pressing of the facing electrode was detected, but since the insulating layer in the first region was thicker than that in Comparative Example 3 used as a reference, the output characteristic deteriorated.

Embodiments of the present disclosure has been described above. However, the present disclosure is not limited to a specific embodiment, and various modifications and changes are possible within the scope of the invention described in the claims.

## Claims

1. An electrode (5), comprising:
an electrode substrate (8);
an electrode mixture layer (9) on the electrode substrate (8); and
an insulating layer (10) on one surface (91) of the electrode mixture layer (9),
wherein
the insulating layer (10) includes
a first region (R1) including a first film thickness layer (10A) having a first thickness (T11) in a direction perpendicular to the one surface (91), and
a second region (R2) including the first film thickness layer (10A) and a second film thickness layer (10B) having a second thickness (T12) in a direction perpendicular to the one surface (91), and
the second region (R2) is at least a part of a peripheral edge (91A) of the one surface (91).

2. The electrode (5) according to claim 1, wherein the first film thickness layer (10A) includes a porous structure body.

3. The electrode (5) according to claim 1 or 2, wherein the second film thickness layer (10B) includes a porous structure body.

4. The electrode (5) according to claim 3, wherein the porous structure body of the first film thickness layer (10A) and the porous structure body of the second film thickness layer (10B) are integrated.

5. The electrode (5) according to claim 2, wherein the second film thickness layer (10B) includes a porous structure body different from the porous structure body of the first film thickness layer (10A).

6. The electrode (5) according to any one of claims 2 to 5, wherein the porous structure body comprises an inorganic oxide bound by a binder.

7. The electrode (5) according to any one of claims 2 to 5, wherein the porous structure body is a resin structure body having a resin skeleton.

8. The electrode (5) according to claim 7, wherein the resin structure body has a co-continuous structure.

9. The electrode (5) according to any one of claims 1 to 8, wherein the second film thickness layer (10B) has an inclined shape reducing in width (W1) with distance from the first region (R1) in a direction perpendicular to the one surface (91).

10. The electrode (5) according to any one of claims 1 to 9, wherein the second region (R2) is formed continuously along an entire circumference of the peripheral edge (91A).

11. The electrode (5) according to any one of claims 1 to 9, wherein the second region (R2) is discontinuously formed along an entire circumference of the peripheral edge (91A).

12. An electrode element, comprising:
a positive electrode (5); and
a negative electrode (11),
wherein the positive electrode (5) and the negative electrode (11) are laminated in a state of being insulated from each other, and
at least one of the positive electrode (5) and the negative electrode (11) is the electrode according to any one of claims 1 to 11.

13. The electrode element according to claim 12, wherein the insulating layer (10) is formed on one of the positive electrode (5) and the negative electrode (11), and
the second thickness (T12) of the second film thickness layer (10B) is equal to or less than a half of a thickness (T21) of another one of the positive electrode (5) and the negative electrode (11) facing said one of the positive electrode (5) and the negative electrode (11) on which the insulating layer (10) is formed.

14. An electrochemical element comprising the electrode (5) according to any one of claims 1 to 11.

15. A power storage device comprising the electrochemical element according to claim 14.
